# EUROPEAN PATENT APPLICATION

(11) **EP 2 424 261 A2**
(43) Date of publication of application: **29.02.2012**
(21) Application number: 11177754.6
(22) Date of filing: 17.08.2011
(51) Int. Cl.: H04N 13/04

(54) **Three-dimensional image display apparatus and driving method thereof**

(30) Priority: 30.08.2010 KR 20100084111
(71) Applicant: SAMSUNG ELECTRONICS CO., LTD., Suwon-si, Gyeonggi-do (KR)
(72) Inventor: Lee, Jae-seung, Seoul (KR)
(74) Representative: Hewett, Jonathan Michael Richard

(57) **Abstract**

A three-dimensional (3D) image processing apparatus and a method of driving the same are provided. The 3D image processing apparatus includes: a display unit which alternately outputs a left eye image and a right eye image; a sync signal processing unit which generates a sync signal to alternately open a left eye shutter and a right eye shutter of 3D glasses in accordance with a timing of outputting the left eye image and the right eye image and transmits the generated sync signal to the 3D glasses; an On-Screen Display (OSD) processing unit which generates an OSD message; and a controlling unit which controls the display unit to output the OSD message between the left eye image and the right eye image so that the OSD message is not recognized when the 3D glasses are used. Accordingly, information regarding whether a 3D broadcast is being provided may be provided efficiently.

## Description

The present invention relates to a three-dimensional (3D) image display apparatus and a driving method thereof, and more particularly, to a 3D image display apparatus which displays a 3D image and a driving method thereof.

A 3D stereoscopic image technology is applicable to various fields such as information communication, broadcasting, medicine, education & training, military, games, animation, virtual reality, computer aided drafting (CAD), and industrial technology, and is regarded as a core base technology for the next generation 3D stereoscopic multimedia information communication, which is used in all the aforementioned fields.

Generally, a stereoscopic sense that a person perceives occurs from a complex effect of the degree of change of thickness of the person's eye lens according to the location of an object to be observed, the angle difference of the object observed from both eyes, the differences of location and shape of the object observed from both eyes, the time difference due to movement of the object, and other various psychological and memory effects.

In particular, binocular disparity, caused by about a 6∼7 cm lateral distance between the person's left eye and right eye, can be regarded as a main cause of the stereoscopic sense. Due to binocular disparity, the person perceives the object with an angle difference, which makes the left eye and the right eye receive different images. When these two images are transmitted to the person's brain through retinas, the brain can perceive the original 3D stereoscopic image by combining the two pieces of information exactly.

There are two types of stereoscopic image display apparatuses: glasses-type apparatuses which use special glasses, and nonglasses-type apparatuses which do not use such special glasses. A glasses-type apparatus may adopt a color filtering method which separately selects images by filtering colors which are in mutually complementary relationships, a polarized filtering method which separates the images received by a left eye from those received by a right eye using a light-shading effect caused by a combination of polarized light elements meeting at right angles, or a shutter glasses method which enables a person to perceive a stereoscopic sense by blocking a left eye and a right eye alternately in response to a sync signal which projects a left eye image signal and a right eye image signal to a screen.

In a related art, if a user sets a 3D mode for a display device and a screen is changed to the 3D mode, no message is displayed to indicate that a 3D broadcast is currently being provided, or an On-Screen Display (OSD) indicating that the 3D broadcast is currently being provided is displayed on the screen even when the user wears 3D glasses.

That is, information regarding the 3D broadcast is displayed regardless of whether the user wears 3D glasses or not, causing an inconvenience to the user.

In addition, if the user does not have sufficient knowledge about a 3D display apparatus, the user may maintain an inappropriate screen setting and thus, the user may not be satisfied with the 3D display apparatus.

Aspects of the present invention relate to a 3D image processing apparatus which efficiently outputs an OSD screen while a 3D broadcast is provided and a driving method thereof.

According to an aspect of the present invention, there is provided a 3D image processing apparatus including: a display unit which alternately outputs a left eye image and a right eye image; a sync signal processing unit which generates a sync signal to alternately open a left eye shutter and a right eye shutter of 3D glasses in accordance with a timing of the alternate output of the left eye image and the right eye image and transmits the generated sync signal to the 3D glasses; an OSD processing unit which generates an OSD message; and a controlling unit which controls the display unit to output the OSD message between the alternate output of the left eye image and the right eye image so that the OSD message is not recognized when the 3D glasses are used.

The sync signal may synchronize a timing of opening and closing the left eye shutter and the right eye shutter of the 3D glasses with a timing of the alternate output of the left eye image and the right eye image so that the OSD message is displayed when both of the left eye shutter and the right eye shutter of the 3D glasses are closed.

The controlling unit may control to insert the OSD message between the alternate output of the left eye image and the right eye image at predetermined time intervals.

The apparatus may further include a user interface, and the controlling unit may control to automatically output the OSD message when an image mode of the display unit is changed from a two-dimensional (2D) image mode to a 3D image mode according to a user command received through the user interface unit or a predetermined event.

The OSD message may include at least one of a message indicating that a 3D broadcast is being provided and a message asking a user to wear the 3D glasses.

The OSD message may be inserted into a black image output between the alternate output of the left eye image and the right eye image.

The left eye image, the right eye image, and the OSD message may be output on a frame-by-frame basis.

According to another aspect of the present invention, there is provided a method of driving a 3D image processing apparatus, the method including: alternately outputting a left eye image and a right eye image; generating a sync signal to alternately open a left eye shutter and a right eye shutter of 3D glasses in accordance with a timing of the alternate outputting of the left eye image and the right eye image and transmitting the generated sync signal to the 3D glasses; generating an OSD message; and outputting the OSD message between the alternate output of the left eye image and the right eye image so that the OSD message is not recognized when the 3D glasses are used.

The sync signal may synchronize a timing of opening and closing the left eye shutter and the right eye shutter of the 3D glasses with the timing of the alternate output of the left eye image and the right eye image so that the OSD message is displayed when both of the left eye shutter and the right eye shutter of the 3D glasses are closed.

The outputting the OSD message may include outputting the OSD message between the alternate output of the left eye image and the right eye image at predetermined time intervals.

The method may further include outputting the OSD message automatically when an image mode is changed from a 2D image mode to a 3D image mode according to a user command received through a user interface unit or a predetermined event.

The OSD message may include at least one of a message indicating that a 3D broadcast is being provided and a message asking a user to wear the 3D glasses.

The OSD message may be inserted into a black image output between the alternate output of the left eye image and the right eye image.

The left eye image, the right eye image, and the OSD message may be output on a frame-by-frame basis.

According to another aspect of the present invention, there is provided a method of driving a 3D image processing apparatus, the method including: alternately outputting a left eye image and a right eye image; generating an OSD message; and outputting the OSD message between the alternate outputting of the left eye image and the right eye image.

Accordingly, a user may be provided with information regarding a 3D broadcast and whether to wear 3D glasses without any interference while watching a 3D image. In addition, a left eye image and a right eye image may be prevented from being mixed with each other.

The above and/or other aspects of the present invention will be more apparent by describing certain exemplary embodiments with reference to the accompanying drawings, in which:
FIG. 1 is a view illustrating a 3D image providing system according to an exemplary embodiment;
FIG. 2 is a view illustrating the configuration of a display apparatus according to an exemplary embodiment;
FIGS. 3A and 3B are views to explain the configuration of 3D glasses 200 and the principal of OSD screen recognition according to an exemplary embodiment;
FIGS. 4A to 4D are views to explain a method for inserting an OSD image according to various exemplary embodiments;
FIGS. 5A and 5B are views to explain the effect of OSD screen recognition according to an exemplary embodiment; and
FIG. 6 is a flowchart to explain a method for driving a 3D image display apparatus according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the description with unnecessary detail. Furthermore, it is understood that expressions such as "at least one of," when preceding a list of elements, modify the entire list of elements and do not modify the individual elements of the list.

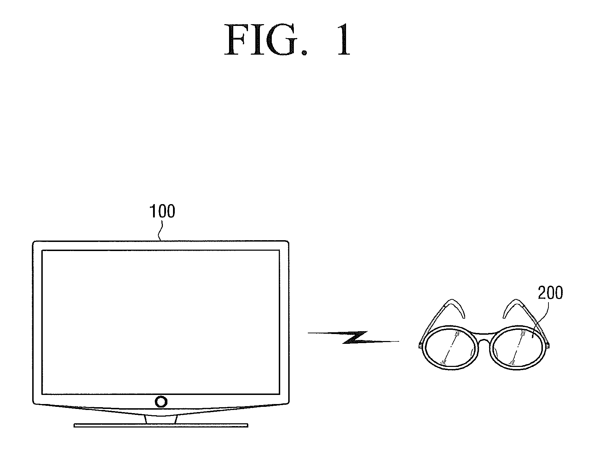

FIG. 1 is a view illustrating a three-dimensional (3D) image providing system according to an exemplary embodiment. As illustrated in FIG. 1, the system includes a display apparatus 100 which displays a 3D image on a screen and 3D glasses 200.

The display apparatus 100 may be embodied to display only a 3D image or both a two-dimensional (2D) image and a 3D image.

When displaying the 2D image, the display apparatus 100 may use the same method as that of a related art 2D display apparatus, and when displaying the 3D image, the display apparatus 100 may receive a 3D image outputted from a photographing device, such as a camera or the like, or a 3D image transmitted from a broadcasting station after photographed by a camera and edited and processed at a broadcasting station, process the received image, and display the processed image on a screen. In particular, the display apparatus 100 may process left eye images and right eye images while referring to a format of the 3D image, and display the processed left eye images and right eye images alternately in a time-sharing manner.

The 3D glasses 200 may be embodied as an active type of shutter glasses. The shutter glasses method, which is a displaying method using binocular disparity, synchronizes images provided by a display apparatus by alternately opening and closing a left eye and a right eye of the 3D glasses so that a user may perceive a stereoscopic sense of an image observed from different angles through brain operation.

The shutter glasses method synchronizes left eye image frames and right eye image frames generated from the display apparatus 100 with a shutter mounted on the 3D glasses 200. That is, the shutter glasses method enables a person to perceive a stereoscopic sense by blocking a left eye and a right eye alternately in response to left and right eye signals of the display apparatus, which will be explained in detail below.

Meanwhile, the 3D image providing system according to an exemplary embodiment may further include a camera (not shown) for producing a 3D image.

The camera (not shown), as a kind of photographing device for producing a 3D image, produces a left eye image photographed to be provided to a left eye of a user, and a right eye image photographed to be provided to a right eye of the user. That is, the 3D image is made up of the left eye image and the right eye image, and the left eye image and the right eye image generate a 3D effect by a binocular disparity while being alternatively provided to the left eye and the right eye of the user, respectively.

For this, the camera (not shown) includes a left eye camera or lens for producing the left eye image and a right eye camera or lens for producing the right eye image, and a space between the left eye camera or lens and the right eye camera or lens is determined in consideration of a space between two eyes of a human.

The camera (not shown) transmits the photographed left and right eye images to the display apparatus 100. In particular, the left eye image and the right eye image, which are transmitted to the display apparatus 100 from the camera, may be transmitted in a format in which one of the left eye image and the right eye image in included in one frame or both the left eye image and the right eye image are included in one frame.

The camera (not shown) may predetermine one of various formats of 3D images in advance, and generate the 3D image according to the determined format to transmit to the display apparatus 100.

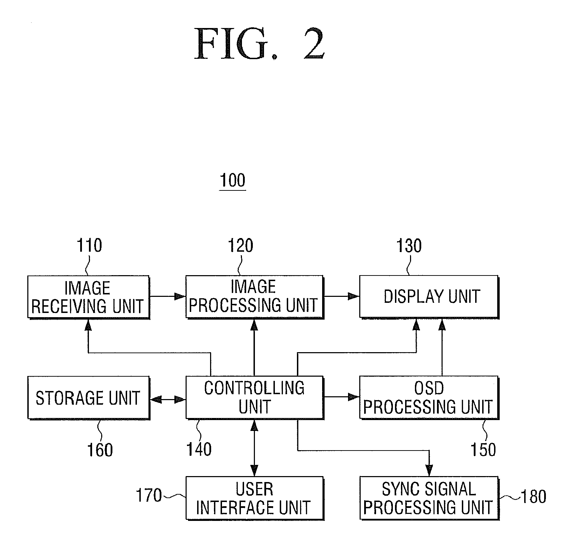

FIG. 2 is a view illustrating the configuration of a display apparatus 100 according to an exemplary embodiment.

According to FIG. 2, the 3D image display apparatus 100 includes an image receiving unit 110, an image processing unit 120, a display unit 130, a controlling unit 140, an OSD processing unit 150, a storage unit 160, a user interface unit 170, and a sync signal processing unit 180.

The image receiving unit 110 receives at least one of a 2D image signal and a 3D image signal transmitted wirelessly or via cables from a broadcasting station or a satellite, and demodulates the received image signal. The image receiving unit 110 may be connected to an external device such as a camera, and receive a 3D image therefrom. Furthermore, the external device may be connected wirelessly or via cables through an interface such as S-Video, Component, Composite, D-Sub, DVI, HDMI, etc. Since the method for processing a 2D image is apparent to those skilled in the related art, the method for processing a 3D image will be explained.

As described above, the 3D image represents an image which includes at least one frame, and both a left eye image and a right eye image may be included in a single image frame or one of a left eye image and a right eye image may be included in each frame. That is, the 3D image is generated according to one of various 3D formats.

Therefore, the 3D image transmitted to the image receiving unit 110 may be in various formats. Specifically, the 3D image can be in one of a general top-bottom method, a side by side method, a horizontal interleave method, a vertical interleave method, a checker board method, a sequential frame method, etc.

The image receiving unit 110 transmits the received 2D image or 3D image to the image processing unit 120.

The image processing unit 120 performs operations of processing signals and adding graphical user interfaces (GUIs) such as video decoding, format analyzing, and video scaling on the received 2D or 3D image.

In particular, the image processing unit 120 generates a left eye image and a right eye image, each of which fits the size of a screen (e.g., 1920x1080), using the format of the 2D image or the 3D image transmitted to the image receiving unit 110.

For example, if the format of the 3D image is one of a top-bottom method, a side by side method, a horizontal interleave method, a vertical interleave method, a checker board method, and a sequential frame method, the image processing unit 120 extracts a left eye image part and a right eye image part from each image frame and performs scaling or interpolation on the extracted left eye image and the right eye image so as to generate a left eye image and a right eye image which will be provided to a user.

Alternatively, if the format of the 3D image is a general frame sequence method, the image processing unit 120 extracts one of a left eye image and a right eye image from each frame to provide the left eye image and the right eye image to a user.

Meanwhile, information regarding the format of an input 3D image may or may not be included in a 3D image signal.

For example, if information regarding the format of an input 3D image is included in a 3D image signal, the image processing unit 120 analyzes the 3D image, extracts information regarding the format of the 3D image and process the received 3D image according to the extracted information. However, if information regarding the format of an input 3D image is not included in a 3D image signal, the image processing unit 120 may process the 3D image according to a format input from a user or a predetermined format.

The image processing unit 120 transmits the extracted left eye image and the right eye image alternately in a timesharing manner to the display unit 130. For example, the image processing unit 120 transmits the left eye image and the right image to the display unit 130 in the order of 'left eye image (L1) → right eye image (R1) → left eye image (L2) → right eye image (R2) → ...'.

In addition, the image processing unit 120 may insert an On-Screen Display (OSD) image generated by the OSD processing unit 150 to a black image or process the OSD image itself as an independent image and provide the processed image to a user.

The display unit 130 outputs the left eye image and the right eye image from the image processing unit 120 alternately and provides the images to a user.

The controlling unit 140 controls overall operations of the display apparatus 100 according to, for example, a user command received from the user interface unit 170 or a predetermined option.

In particular, the controlling unit 140 controls the image receiving unit 110 and the image processing unit 120, so that the 3D image can be received, the received 3D image can be separated into the left eye image and the right eye image, and each of the separated left eye image and the right eye image can be scaled or interpolated to fit one screen.

Furthermore, the controlling unit 140 controls the display unit 130 to switch the polarization direction of an image provided through the display unit 130 so that the polarization direction of the image may be consistent of the left eye image or the right eye image.

In addition, the controlling unit 140 may control the OSD processing unit 150, which will be explained below.

The OSD processing unit 150 generates an OSD message which is displayed by being overlapped with a 2D image or a 3D image output from the display unit 130. Herein, the OSD message may be a 2D image or a 3D image.

In an OSD screen, at least one of a text or a figure of a warning message, a menu, a time, and a channel number may be displayed by being overlapped with a display image.

For example, a warning message may be displayed in an OSD according to a predetermined option or event.

Alternatively, a user may manipulate an input apparatus such as a manipulation panel or a remote controller to display a main menu or a sub menu on the screen in an OSD so that a user may select a desired operation from the menu.

Such a menu may include at least one of options to be selected from a display apparatus and items for adjusting the operation of a display apparatus.

In addition, the OSD processing unit 150 may perform the operation of adjusting at least one of an active mode between a 2D mode and a 3D mode, the degree of transparency, color, size, shape, location, highlight, and animation effect under the control of the controlling unit 140.

If the display unit 130 displays a 3D image according to a predetermined option, a predetermined event, or a user command, the controlling unit 140 may control to display an OSD image of a predetermined type, generated by the OSD processing unit 140, along with the 3D image. Specifically, an OSD screen including a message indicating that 3D broadcast is being provided may be generated.

Specifically, if a 3D image is displayed, the controlling unit 140 may control to display an image including an OSD message or a black image including an OSD message after at least one of a left eye image (L) or a right eye image (R) is displayed. In this case, the above-described mode where an OSD message is displayed while a 3D broadcast is being provided may be set by a manufacturer or a user.

The storage unit 160 is a storage medium which stores various programs used to operate the 3D image display apparatus 100 and may be embodied as a memory or a Hard Disk Drive (HDD). For example, the storage unit may include a ROM for storing programs used to operate the controlling unit 140 and RAM for temporarily storing data regarding the operation of the controlling unit 140. In addition, the storage unit may further include an Electrically Erasable and Programmable ROM (EEROM) for storing various reference data. It is understood that the storage unit 160 may include any of volatile and non-volatile storage devices.

The user interface unit 170 transmits, to the controlling unit 140, a user command received through any of various input methods, such as a remote controller, an input panel, etc.

The sync signal processing unit 180 generates a sync signal to open the left eye shutter glasses and right eye shutter glasses of the 3D glasses 200 alternately in accordance with a display timing of a left eye image and a right eye image and transmits the generated sync signal to the 3D glasses 200 so that the left eye image is displayed on the display unit when the left eye of the 3D glasses 200 opens and the right eye image is displayed when the right eye of the 3D glasses 200 opens as the 3D glasses 200 open and close alternately. Herein, the sync signal may be transmitted in the form of infrared rays, though it is understood that another exemplary embodiment is not limited thereto.

The controlling unit 140 controls an overall operation of the 3D image display apparatus 100 according to, for example, a user manipulation transmitted from the user interface unit 170.

In particular, the controlling unit 140 controls the image receiving unit 110 and the image processing unit 120, so that the 3D image can be received, the received 3D image can be separated into the left eye image and the right eye image, and each of the separated left eye image and the right eye image can be scaled or interpolated to fit one screen.

In addition, the controlling unit 140 controls the OSD processing unit 150 to generate an OSD corresponding to a user manipulation transmitted from the user interface unit 170 and controls the sync signal processing unit 180 to generate and transmit a sync signal which is synchronized with the output timing of a left eye image and a right eye image.

Furthermore, the controlling unit 140 may control the display unit 130 to display an OSD message between the display timing of the left eye image and the right eye image so that the OSD message can be recognized when a user does not wear 3D glasses.

Meanwhile, the 3D glasses 200 opens and closes left eye shutter glasses and right eye shutter glasses alternately in accordance with a sync signal received from the 3D image display apparatus 100 so that a user may watch the left eye image and the right eye image through the left eye and the right eye respectively.

The display unit 130 may include a panel driving unit (not shown), a display panel unit (not shown), a backlight driving unit (not shown), and a backlight emitting unit (not shown), but detailed description regarding these components will be omitted herein.

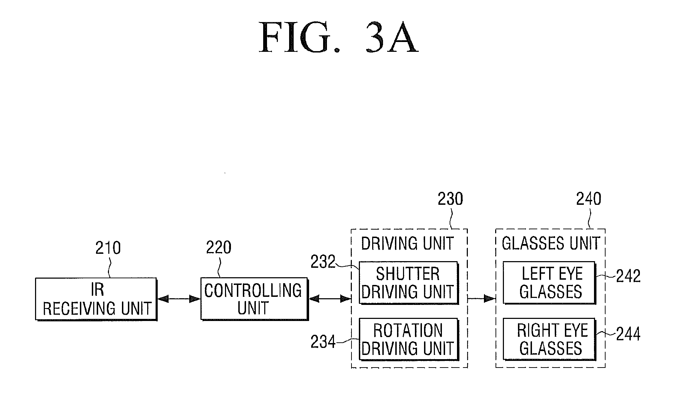

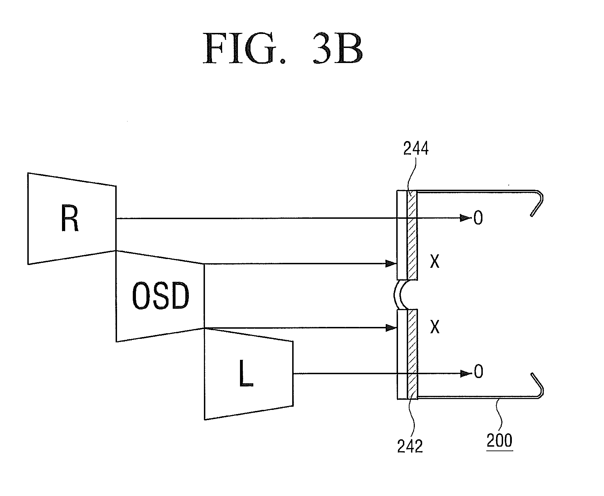

FIGS. 3A and 3B are views to explain the configuration of the 3D glasses 200 and the principal of OSD screen recognition according to an exemplary embodiment.

FIG. 3A is a block diagram illustrating the configuration of the 3D glasses 200 according to an exemplary embodiment.

According to FIG. 3A, the 3D glasses 200 include an IR receiving unit 210, a controlling unit 220, a driving unit 230, and a glasses unit 240.

The IR receiving unit 210 receives a sync signal of a 3D image from the sync signal processing unit 180 of the display apparatus 100 which is connected wirelessly or via cables. In particular, the sync signal processing unit 180 emits a sync signal using infrared rays in a straight line and the IR receiving unit 210 receives the sync signal from the emitted infrared rays.

For example, the sync signal transmitted from the sync signal processing unit 180 to the IR receiving unit 210 may be a signal where a high level and low level alternate at predetermined time intervals and may be embodied such that a left eye image is transmitted during a high level and a right eye is transmitted during a low level, though it is understood that another exemplary embodiment is not limited thereto.

The IR receiving unit 210 transmits the sync signal received from the sync signal processing unit 180 to the controlling unit 220.

The controlling unit 220 controls overall operations of the 3D glasses 200. In particular, the controlling unit 220 generates a control signal based on the sync signal received from the IR receiving unit 210 and controls the driving unit 210 by transmitting the generated control signal to the driving unit 230. In addition, the controlling unit 220 controls the driving unit 230 to generate a driving signal to drive the glasses unit 240 based on the sync signal.

As illustrated, the driving unit 230 includes a shutter driving unit 232 and a rotation driving unit 234. The shutter driving unit 232 is a driving unit to drive the shutter of the glasses unit 240 and the rotation driving unit 234 is a driving unit to rotate the glasses of the glasses unit 240.

The shutter driving unit 232 generates a shutter driving signal based on a control signal received from the controlling unit 220. In particular, the glasses unit 249, which will be explained below, includes a left eye shutter glasses 242 and a right eye shutter glasses 244. Accordingly, the shutter driving unit 232 generates a left eye shutter driving signal to drive the shutter of the left eye shutter glasses 242 and a right eye shutter driving signal to drive the shutter of the right eye shutter glasses 244, respectively, and transmits the generated left eye shutter driving signal to the left eye shutter glasses 242 and the right eye shutter driving signal to the right eye shutter glasses 244.

The rotation driving unit 234 generates a rotating driving signal based on the control signal received from the controlling unit 220. Herein, the rotation control signal includes information regarding a rotation angle and a rotation direction. The glasses unit 240 includes the left eye shutter glasses 242 and the right eye shutter glasses 244. Accordingly, the rotation driving unit 234 generates a left eye rotation driving signal to rotate the left eye shutter glasses 242 and a right eye rotation driving signal to rotate the right eye shutter glasses 244, respectively, and transmits the generated left eye rotation driving signal to the left eye shutter glasses 242 and the right eye rotation driving signal to the right eye shutter glasses 244.

As described above, the glasses unit 240 includes the left eye shutter glasses 242 and the right eye shutter glasses 244. The glasses unit 240 opens and closes glasses according to the shutter driving signal received from the shutter driving unit 232 and rotates glasses according to the rotation driving signal received from the rotation driving unit 234.

The left eye shutter glasses 242 and the right eye shutter glasses 242 may be embodied as liquid crystal. That is, the glasses unit 240 may open and close a shutter using the liquid crystal of the left eye shutter glasses 242 and the right eye shutter glasses 244.

Additionally, the 3D glasses 200 may include a power supply unit (not shown) to provide power to the 3D glasses. The on/off state of the power supply unit (not shown) is controlled by the controlling unit 220.

Meanwhile, the light of the image output from the 3D image display apparatus 100 may be in a polarized state. For example, if the 3D image display apparatus 200 is embodied as a liquid crystal display (LCD), the light is output by being linearly polarized in a specific direction due to the characteristics of the LCD TV.

FIG. 3B is a view to explain the principal of OSD screen recognition according to an exemplary embodiment.

As explained above with respect to FIG. 3A, the left eye shutter glasses 242 and the right eye shutter glasses 244 of the 3D glasses 200 are opened and closed rapidly based on the sync signal received from the IR receiving unit 210 under the control of the controlling unit 220.

That is, the left eye shutter glasses 242 and the right eye shutter glasses 244 of the 3D glasses 200 are opened and closed when the left eye image (L) and the right eye image (R) are displayed and an OSD image is displayed when the shutters of both the left eye shutter glasses 242 and the right eye shutter glasses 244 are closed. Therefore, a user may not visually recognize the OSD image when the user wears the 3D glasses 200.

According to FIG. 3B, one of the left eye image (L) and the right eye image (R) is displayed when the shutter of the corresponding one of the left eye shutter glasses 242 and the right eye shutter glasses 244 is opened and thus, the displayed one of the left eye image (L) and the right eye image (R) can be recognized by the corresponding eye of a user. However, the OSD image is displayed when the shutters of both the left eye shutter glasses 242 and the right eye shutter glasses 244 are closed and thus, the OSD image cannot be recognized by the user who wears the 3D glasses 200. Accordingly, the user may not recognize the OSD message while the user wears the 3D glasses 200 and watch only the 3D image including the left eye image (L) and the right eye image (R).

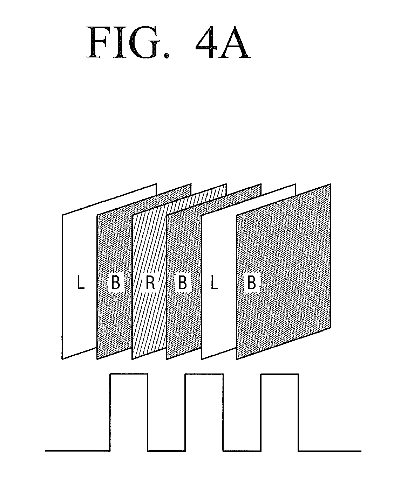

FIGS. 4A to 4D are views to explain a method for inserting an OSD image according to various exemplary embodiments.

According to FIG. 4A, an image may be displayed in the order of 'left eye image (L) → blank image (B) → right eye image (R) → blank image (B) → left eye image (L) ...' Herein, the blank image (B) may be a frame including an OSD message or a black image to which an OSD message is inserted.

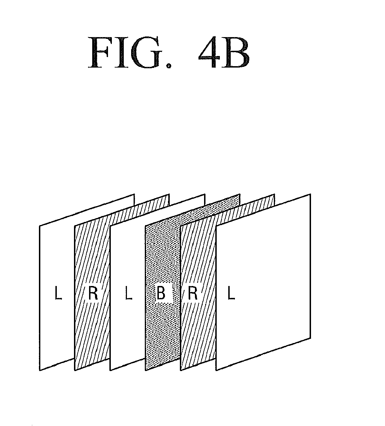

According to FIG. 4B, an image may be displayed in the order of 'left eye image (L) → right eye image (R) → left eye image (L) → blank image (B) → right eye image (R) → left eye image (L) → right eye image (R) → left eye image (L2) → blank image (B) → right eye image (R)...' That is, the blank image (B) may not be inserted between the left eye image (L) and the right eye image (R) and instead, may be inserted at predetermined intervals. Likewise, the blank image may be a frame including an OSD message or a black image to which an OSD message is inserted.

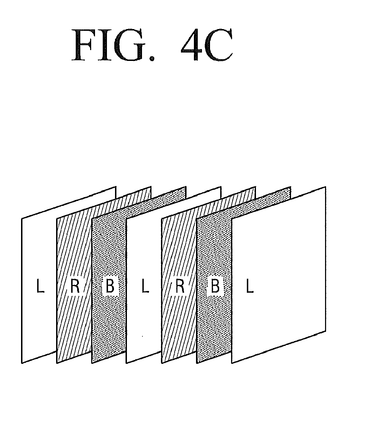

According to FIG. 4C, an image may be displayed in the order of 'left eye image (L) → right eye image (R) → blank image (B) → left eye image (L) → right eye image (R) → blank image (B) ...' That is, the blank image (B) may not be inserted between the left eye image (L) and the right eye image (R) and instead, may be inserted after the left eye image (L) and the right eye image (R) which are included in a 3D image are displayed. Likewise, the blank image may be a frame including an OSD message or a black image to which an OSD message is inserted.

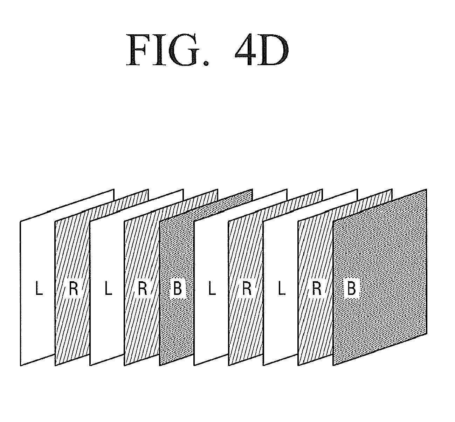

According to FIG. 4D, an image may be displayed in the order of 'left eye image (L) → right eye image (R) → left eye image (L) → right eye image (R) → blank image (B → left eye image (L) → right eye image (R) → left eye image (L2) → right eye image (R) → blank image (B) ...' That is, even when the blank image (B) is inserted after the left eye image (L) and the right eye image (R) which are included in a 3D image are displayed, the blank image (B) may be inserted at predetermined intervals rather than being inserted after each time the left eye image (L) and the right eye image (R) are displayed. Likewise, the blank image may be a frame including an OSD message or a black image to which an OSD message is inserted.

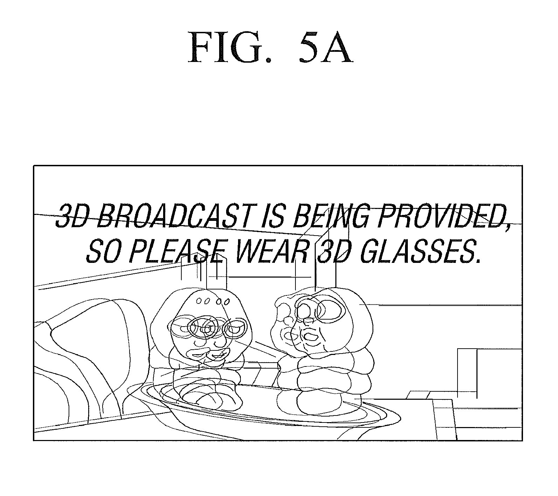

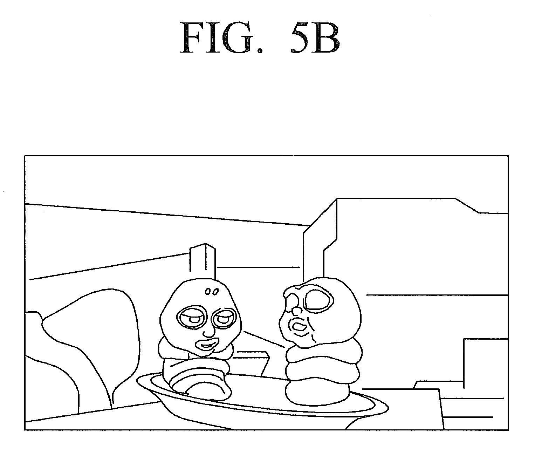

FIGS. 5A and 5B are views to explain the effect of OSD screen recognition according to an exemplary embodiment.

According to FIG. 5A, when the left eye image (L), the right eye image (R), and the blank image (B) including the OSD image are displayed as illustrated in FIGS. 3A to 3D, if a user does not wear the 3D glasses 200, the user may recognize the OSD message included in the blank image (B). For example, if the OSD message, "3D broadcast is being provided, so please put on glasses," is included in the blank image (B), the user may recognize that a 3D broadcast is being provided through the OSD message.

According to FIG. 5B, even if the left eye image (L), the right eye image (R), and the blank image (B) including the OSD image is displayed as illustrated in FIGS. 3A to 3D, if the user wears 3D glasses, the user may not recognize the OSD message included in the blank image (B). That is, the 3D glasses 200 opens only when the left eye image (L) and the right eye image (R) are displayed and thus, the user may not recognize the OSD message displayed at other times. Accordingly, the user may not experience any inconvenience even when the blank image (B) including the OSD image is displayed. In addition, as the blank image (B) is inserted between the left eye image (L) and the right eye image (R), the left eye image (L) and the right eye image (R) may be mixed with each other.

Meanwhile, though in the present exemplary embodiment, the left eye image is displayed and then the right eye image is displayed, it is understood that another exemplary embodiment is not limited thereto. The order of displaying the left eye image and the right eye image may vary depending on the design of those skilled in the related art.

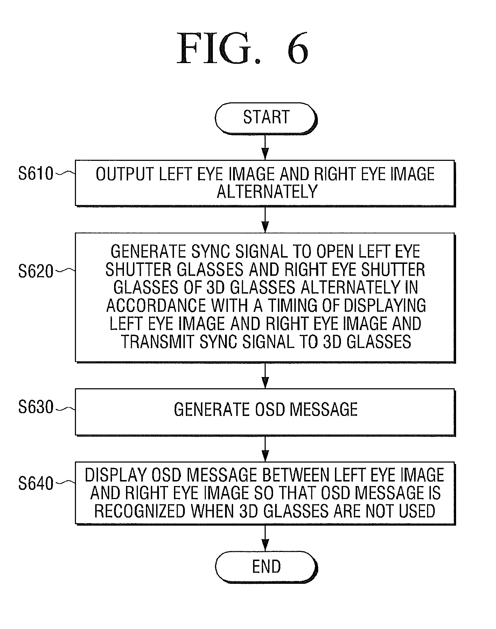

FIG. 6 is a flowchart to explain a method for driving a 3D image display apparatus according to an exemplary embodiment.

According to the method for driving a 3D image display apparatus, the left eye image and the right eye image are output alternately (operation S810), and a sync signal to open the left eye shutter glasses and the right eye shutter glasses of 3D glasses in accordance with the timing of displaying the left eye image and the right eye image is generated and transmitted to the 3D glasses (operation S820).

An OSD message is generated (operation S830), and the OSD message is displayed between the timing of displaying the left eye image and the right eye image so that the OSD message can be recognized when a user does not wear the 3D glasses (operation S840).

Herein, the sync signal may be a signal to synchronize the timing of opening and closing the 3D glasses with the display timing of a display apparatus so that the OSD message is displayed when both the left eye shutter glasses and the right eye shutter glasses of the 3D glasses are closed.

In addition, the OSD message may be inserted between the left eye image and the right eye image at predetermined intervals and displayed.

If an image displayed on the display unit is changed from a 2D image to a 3D image according to a user command or a predetermined event, the OSD message may be automatically inserted and displayed.

Herein, the OSD message may include at least one of a message indicating that 3D broadcast is being provided and a message asking a user to put on 3D glasses.

In addition, the OSD message may be inserted into a black image displayed between the left eye image and the right eye image.

Furthermore, the left eye image, the right eye image and the OSD message may be displayed by frame.

Accordingly, a user may watch the OSD message regarding a 3D broadcast when the user does not wear the 3D glasses and may not watch the OSD message when the user wears the 3D glasses.

Therefore, a case where the user does not recognize that a 3D broadcast is being provided may be prevented.

In addition, the user may receive guidance regarding a 3D broadcast without any interference with watching a 3D image.

Furthermore, as the OSD image is inserted between the left eye image and the right eye image, the left eye image and the right eye image may not be mixed with each other.

While the above exemplary embodiments are described with reference to a display apparatus 100 including a display unit 130, it is understood that another exemplary embodiment is not limited thereto and may be implemented as an image processing apparatus that does not include a display unit.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, one or more units of the display apparatus 100 and the glasses 200 can include a processor or microprocessor executing a computer program stored in a computer-readable medium.

Although a few exemplary embodiments have been shown and described, it would be appreciated by those skilled in the art that changes may be made without departing from the invention, the scope of which is defined in the claims.

## Claims

1. A three-dimensional (3D) image processing apparatus, comprising:
a display unit which alternately outputs a left eye image and a right eye image;
a sync signal processing unit which generates a sync signal to alternately open a left eye shutter and a right eye shutter of 3D glasses in accordance with a timing of the alternate output of the left eye image and the right eye image and transmits the generated sync signal to the 3D glasses;
an On-Screen Display (OSD) processing unit which generates an OSD message; and
a controlling unit which controls the display unit to output the OSD message between the alternate output of the left eye image and the right eye image so that the OSD message is not recognized by a user when the 3D glasses are worn by the user and are operated according to the transmitted sync signal to view the left eye image and the right eye image.

2. The apparatus as claimed in claim 1, wherein the sync signal synchronizes a timing of opening and closing the left eye shutter and the right eye shutter of the 3D glasses with the timing of outputting the left eye image and the right eye image so that the OSD message is displayed when both of the left eye shutter and the right eye shutter of the 3D glasses are closed.

3. The apparatus as claimed in claim 1 or 2, wherein the controlling unit controls to output the OSD message between the alternate output the left eye image and the right eye image at predetermined time intervals.

4. The apparatus as claimed in anyone of claims 1 to 3, further comprising:
a user interface;
wherein the controlling unit controls to automatically insert the OSD message when an image mode of the display unit is changed from a two-dimensional (2D) image mode to a 3D image mode according to a user command received through the user interface unit or a predetermined event.

5. The apparatus as claimed in anyone of claims 1 to 4, wherein the OSD message comprises at least one of a message indicating that a 3D broadcast is being provided and a message asking a user to wear the 3D glasses.

6. The apparatus as claimed in anyone of claims 1 to 5, wherein the OSD message is inserted into a black image output between the alternate output of the left eye image and the right eye image.

7. The apparatus as claimed in anyone of claims 1 to 6, wherein the left eye image, the right eye image, and the OSD message are output on a frame-by-frame basis.

8. The apparatus as claimed in anyone of claims 1 to 7, wherein the controlling unit controls to automatically insert the OSD message when an image mode of the display unit changes from a 2D image mode to a 3D image mode.

9. A method of driving a 3D image processing apparatus, the method comprising:
alternately outputting a left eye image and a right eye image;
generating a sync signal to alternately open a left eye shutter and a right eye shutter of 3D glasses in accordance with a timing of the outputting the left eye image and the right eye image and transmitting the generated sync signal to the 3D glasses;
generating an OSD message; and
outputting the OSD message between the alternate outputting of the left eye image and the right eye image so that the OSD message is not recognized by a user when the 3D glasses are worn by the user and are operated according to the transmitted sync signal to view the left eye image and the right eye image.

10. The method as claimed in claim 9, wherein the sync signal synchronizes a timing of opening and closing the left eye shutter and the right eye shutter of the 3D glasses with the timing of the outputting the left eye image and the right eye image so that the OSD message is displayed when both of the left eye shutter and the right eye shutter of the 3D glasses are closed.

11. The method as claimed in claim 9 or 10, wherein the outputting the OSD message comprises outputting the OSD message between the alternate outputting of the left eye image and the right eye image at predetermined time intervals.

12. The method as claimed in anyone of claims 9 to 11, further comprising:
inserting the OSD message automatically when an image mode is changed from a 2D image mode to a 3D image mode according to a user command received through a user interface unit or a predetermined event.

13. The method as claimed in anyone of claims 9 to 12, wherein the OSD message comprises at least one of a message indicating that a 3D broadcast is being provided and a message asking a user to wear the 3D glasses.

14. The method as claimed in anyone of claims 9 to 13, wherein the OSD message is inserted into a black image output between the alternate outputting of the left eye image and the right eye image.

15. The method as claimed in anyone of claims 9 to 14, wherein the left eye image, the right eye image, and the OSD message are output on a frame-by-frame basis.
